# EUROPÄISCHE PATENTSCHRIFT

(11) **EP 0 686 838 B1**
(45) Veröffentlichungstag und Bekanntmachung des Hinweises auf die Patenterteilung: **06.05.1998**
(21) Anmeldenummer: 94810344.5
(22) Anmeldetag: 10.06.1994
(51) Int. Cl.: G01L 5/04

(54) **Vorrichtung zum Messen der Fadenspannung und Webmaschine**
Device for measuring yarn tension and loom
Dispositif pour mesurer la tension des fils et métier

(43) Veröffentlichungstag der Anmeldung: 13.12.1995
(73) Patentinhaber: SULZER RÜTI AG, CH-8630 Rüti (CH)
(72) Erfinder: De Jager, Godert, Dr., CH-8121 Benglen (CH)
(74) Vertreter: Heubeck, Bernhard

(56) Entgegenhaltungen:
- DE-A- 3 150 118
- DE-A- 3 223 054
- US-A- 3 845 434
- PATENT ABSTRACTS OF JAPAN vol. 7, no. 193 (M-238) 24. August 1983 & JP-A-58 093 680 (YOKOHAMA GOMU KK) 3. Juni 1983

## Beschreibung

Die Erfindung betrifft eine Vorrichtung zur Messung der Fadenspannung (DE-A1-3150118 Figur 2 und Seite 18) sowie eine entsprechende webmaschine.

Der Erfindung liegt die Aufgabe zugrunde, eine Vorrichtung zur Messung der Fadenspannung zu schaffen, die geringe Spannungswerte mit Sicherheit misst und zudem nahezu hysteresefrei funktioniert.

Diese Aufgabe wird erfindungsgemäss durch den Anspruch 1 gelöst. Eine entsprechende Webmaschine ist im Anspruch 8 angegeben.

Als vorteilhaft erweist sich die massearme Ausführung, welche eine hohe Ansprechempfindlichkeit zur Folge hat und dass eine hochfrequente Messung durchführbar ist.

Im folgenden wird die Erfindung anhand der beiliegenden Zeichnungen erläutert.

Es zeigen:
- Fig. 1: eine Ausführungsform einer erfindungsgemässen Vorrichtung;
- Fig. 2: eine zweite Ausführungsform einer erfindungsgemässen Vorrichtung;
- Fig. 3: eine dritte Ausführungsform einer erfindungsgemässen Vorrichtung und
- Fig. 4: eine vierte Ausführungsform einer erfindungsgemässen Vorrichtung.

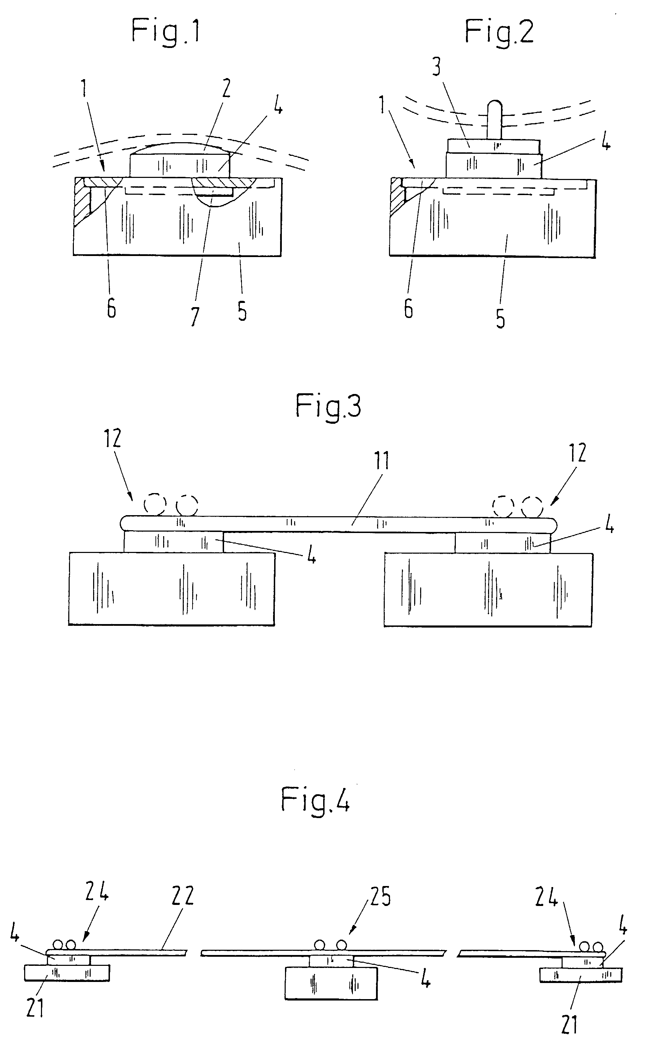

Die Figuren 1 und 2 zeigen Messeinheiten zur Messung der Fadenspannung an einem einzelnen Faden, wobei der Fadenverlauf unterschiedlich ist.

Die Messeinheit besteht im wesentlichen aus einem Signalgeber 1, ein Fadenführungsorgan 2, 3, einer elastischen Schicht 4 und einem Halter 5.

Der Signalgeber 1 besteht aus einer biegeelastischen Platte 6 und einer Anzahl von Dehnungsmessstreifen 7, die auf einer Oberfläche der Platte angeordnet sind. Der Signalgeber 1 ist in dem Halter 5 so angeordnet, dass die mit den Dehnungsmessstreifen bestückte Plattenfläche die Unterseite und die andere Plattenfläche die Oberseite bildet, welche den Halter bündig abschliesst. Die elastische Schicht 4 besteht aus Silikonkautschuk, das auf die Oberseite der Platte 6 aufgetragen ist und zur Kraftübertragung dient. Das Fadenführungsorgan 2, 3 besteht aus Keramik und ist auf die Schicht 4 freiliegend aufgesetzt, wobei die Auflagefläche der Schicht 4 und das Fadenführungsorgan 3 die gleichen Abmessungen aufweisen. Bei der bevorzugten Ausführungsform der Messeinheit ist das Fadenführungsorgan 2 kreisabschnittförmig ausgebildet und hat eine Rille (nicht dargestellt) in der Oberseite, um den Faden zu führen (Fig. 1).

Bei der anderen Ausführungsform der Messeinheit weist das Fadenführungsorgan 3 einen hakenförmigen Ansatz oder eine Oese auf (Fig. 2). Dadurch kann der Einbauort der Messeinheit frei gewählt werden.

Die vorstehend beschriebenen Ausführungsformen eignen insbesondere zur Messung der Schussfadenspannung in einer Webmaschine.

Die Fig. 3 zeigt eine Vorrichtung zur Messung der Fadenspannung einer vorbestimmten Anzahl von Fäden. Die Vorrichtung enthält zwei Messeinheiten und ein längliches Fadenführungsorgan 11, welches mit seinen Endabschnitten 12 jeweils mit der Schicht 4 der Messeinheit verbunden sind.

Die Fig. 4 zeigt eine Vorrichtung zur Messung der Fadenspannung einer Mehrzahl von Fäden. Die Vorrichtung umfasst eine Messeinheit, zwei Auflager 21 und ein langgestrecktes Fadenführungsorgan 22. Die zwei Auflager 21 sind mit einer Schicht 4 aus Silikonkautschuk versehen. Das Fadenführungsorgan 22 ist an seinen Endabschnitten 24 jeweils mit der Schicht 4 und an einem weiteren Abschnitt 25 mit der Schicht 4 der Messeinheit verbunden.

Auf einer Webmaschine werden bekanntlich unterschiedliche Artikel hergestellt. Dies hat unterschiedliche Spannungen für die Schuss- und Kettfäden zur Folge. Bei der Messung der Kettfadenspannung kann diesem dadurch Rechnung getragen werden, in dem man die Messung mit der Vorrichtung gemäss Fig. 3 im Randbereich der Kettschar oder mit der Vorrichtung nach Fig. 4 über die gesamte Kettschar vornimmt.

Die Vorrichtung enthält eine Messeinheit bestehend aus einem Signalgeber 1, einem Fadenführungsorgan 2 und einer elastischen Schicht 4, die zwischen Signalgeber und Fadenführungsorgan angeordnet und mit diesen verbunden ist. Durch die freiliegende Anordnung der Schicht und des Fadenführungsorgans wird eine nahezu hysteresefreie Funktion erreicht.

## Patentansprüche

1. Vorrichtung zur Messung der Fadenspannung, welche Vorrichtung mindestens eine Messeinheit mit einem Signalgeber (1), einem Fadenführungsorgan (2) und einem elastischen Mittel (4) umfasst, welches zwischen dem Signalgeber und dem Fadenführungsorgan angeordnet ist, dadurch gekennzeichnet, dass als elastisches Mittel eine Schicht (4) auf den Signalgeber (1) aufgebracht ist und dass das Fadenführungsorgan (2, 3, 11, 22) freiliegend mit der Schicht (4) verbunden ist.

2. Vorrichtung nach Anspruch 1, dadurch gekennzeichnet, dass der Signalgeber (1) aus einer biegeelastischen Platte (6) und mindestens einem Messelement (7) besteht, das mit einer Plattenoberfläche in Verbindung steht.

3. Vorrichtung nach Anspruch 2, dadurch gekennzeichnet, dass das Messelement (7) ein Dehnungsstreifen oder Piezoquarz ist.

4. Vorrichtung nach Anspruch 1, dadurch gekennzeichnet, dass die Schicht (4) aus einem elastomeren Stoff besteht, ausgewählt aus der Gruppe Silikonkautschuk, Nitrilkautschuk, Polyurethan oder dgl. und Mischungen davon.

5. Vorrichtung nach Anspruch 1, dadurch gekennzeichnet, dass das Fadenführungsorgan (2, 3, 11, 22) aus Metall oder Nichtmetall besteht.

6. Vorrichtung nach Anspruch 1, gekennzeichnet durch zwei Messeinheiten, die im Abstand zueinander angeordnet sind und durch ein längliches Fadenführungsorgan (11) mit Endabschnitten (12), die jeweils mit der elastischen Schicht (4) der Messeinheit verbunden sind.

7. Vorrichtung nach Anspruch 1, gekennzeichnet durch zwei Auflager (21), die mit der elastischen Schicht (4) versehen und im Abstand zueinander angeordnet sind, durch ein Fadenführungsorgan (22), das mit den Endabschnitten (24) jeweils mit der elastischen Schicht (4) verbunden ist und mindestens eine Messeinheit, die mit einem weiteren Abschnitt (25) des Fadenführungsorgans (22) verbunden ist.

8. Webmaschine mit einer Vorrichtung nach einem der Ansprüche 1 bis 7, wobei die Vorrichtung dazu bestimmt ist, die Fadenspannung von mindestens einem Kett- und/oder Schussfaden zu messen.

## Claims

1. Apparatus for measuring yarn tension, said apparatus including at least one measurement unit having a signal transmitter (1), a yarn guiding member (2) and a resilient means (4) arranged between the signal transmitter and the yarn guiding member, characterized in that a layer (4) serving as the resilient means is mounted on the signal transmitter (1) and in that the yarn guiding member (2, 3, 11, 22) is exposedly connected to the layer (4).

2. Apparatus in accordance with claim 1, characterized in that the signal transmitter (1) comprises an elastically bendable plate (6) and at least one measurement element (7) connected to a plate surface.

3. Apparatus in accordance with claim 2, characterized in that the measurement element (7) is a strain gauge or a quartz piezo.

4. Apparatus in accordance with claim 1, characterized in that the layer (4) is made of an elastomeric material, selected from the group comprising silicone rubber, nitrile rubber, polyurethane or the like and mixtures thereof.

5. Apparatus in accordance with claim 1, characterized in that the yarn guiding member (2, 3, 11, 22) is made of metal or non-metal.

6. Apparatus in accordance with claim 1, characterized by two measurement units which are arranged at a distance from one another and which are connected via an elongate yarn guiding member (11) having end sections (12) which are respectively connected to the elastic layer (4) of the measurement unit.

7. Apparatus in accordance with claim 1, characterized by two supports (21) which are provided with the elastic layer (4) and which are arranged at a distance from one another, by a yarn guiding member (22), the end sections (24) of which are each connected to the elastic layer (4), and by at least one measurement unit which is connected to a further section (25) of the yarn guiding member (22).

8. Weaving machine having an apparatus in accordance with one of the claims 1 to 7, wherein the apparatus is designed to measure the yarn tension of at least one warp and/or weft yarn.

## Revendications

1. Dispositif de mesure de la tension de fil, ce dispositif comportant au moins une unité de mesure avec un capteur de signaux (1), un organe guide-fil (2) et un moyen élastique (4) qui est disposé entre le capteur de signaux et l'organe guide-fil, caractérisé en ce qu'il est appliqué comme moyen élastique une couche (4) sur le capteur de signaux (1) et en ce que l'organe guide-fil (2, 3, 11, 22) est relié à la couche (4) d'une manière disposée librement.

2. Dispositif selon la revendication 1, caractérisé en ce que le capteur de signaux (1) est constitué d'une plaque (6) élastique en flexion et d'au moins un élément de mesure (7) qui est en liaison avec une surface de la plaque.

3. Dispositif selon la revendication 2, caractérisé en ce que l'élément de mesure (7) est une bande d'extension ou un quartz piézoélectrique.

4. Dispositif selon la revendication 1, caractérisé en ce que la couche (4) est constituée d'une matière élastomère, choisie dans le groupe caoutchouc-silicone, caoutchouc-nitrile, polyuréthane ou analogues et de leurs mélanges.

5. Dispositif selon la revendication 1, caractérisé en ce que l'organe guide-fil (2, 3, 11, 22) est en métal ou en non-métal.

6. Dispositif selon la revendication 1, caractérisé par deux unités de mesure qui sont disposées à une certaine distance l'une de l'autre et qui sont reliées par un organe guide-fil oblong (11) à des tronçons d'extrémité (12) qui sont reliés respectivement à la couche élastique (4) de l'unité de mesure.

7. Dispositif selon la revendication 1, caractérisé par deux éléments d'appui (21) qui sont pourvus de la couche élastique (4) et qui sont disposés à une certaine distance l'un de l'autre, par un organe guide-fil (22) qui est relié par ses tronçons d'extrémité (24) respectivement à la couche élastique (4) et au moins une unité de mesure qui est reliée à un tronçon additionnel (25) de l'organe guide-fil (22).

8. Métier à tisser comportant un dispositif selon l'une des revendications 1 à 7, le dispositif étant destiné à mesurer la tension du fil d'au moins un fil de chaîne et/ou fil de trame.
